# EUROPÄISCHE PATENTSCHRIFT

(11) **EP 4 249 130 B1**
(45) Veröffentlichungstag und Bekanntmachung des Hinweises auf die Patenterteilung: **25.02.2026**
(21) Anmeldenummer: 23161165.8
(22) Anmeldetag: 10.03.2023
(51) Int. Cl.: B05B 14/43, B05B 13/04, B05B 14/48, B05B 16/40, B05B 16/60

(54) **BESCHICHTUNGSKABINE ZUM BESCHICHTEN VON WERKSTÜCKEN MIT BESCHICHTUNGSMATERIAL**
COATING BOOTH FOR COATING WORKPIECES WITH COATING MATERIAL
CABINE DE REVÊTEMENT POUR REVÊTIR DES PIÈCES AVEC UN MATÉRIAU DE REVÊTEMENT

(30) Priorität: 21.03.2022 DE 102022106539; 07.04.2022 DE 102022108374
(43) Veröffentlichungstag der Anmeldung: 27.09.2023
(73) Patentinhaber: Gema Switzerland GmbH, 9200 Gossau (CH)
(72) Erfinder: Steiger, Peter, 9200 Gossau (CH); Probst, Andreas, 9000 St. Gallen (CH)
(74) Vertreter: Meissner Bolte Partnerschaft mbB

(56) Entgegenhaltungen:
- EP-A1- 2 275 209
- EP-B1- 2 879 807
- WO-A1-99/12658
- DE-A1- 102020 113 645
- US-A1- 2003 127 047
- US-A1- 2013 061 886

## Beschreibung

Die Erfindung betrifft allgemein das Fachgebiet der Beschichtung von Werkstücken mit Beschichtungsmaterial, wie beispielsweise Beschichtungspulver oder Beschichtungsmaterial in flüssiger Form, wie beispielsweise Lack.

Gemäß Aspekten der Erfindung betrifft diese insbesondere eine Beschichtungsanlage zum Beschichten eines Werkstücks sowie ein Verfahren zum Betreiben einer solchen Beschichtungsanlage.

Die Beschichtungsanlage ist beispielsweise zum Beschichten von Werkstücken mit Beschichtungspulver geeignet. Allerdings ist die vorliegende Erfindung nicht auf Beschichtungsanlagen oder Beschichtungssysteme bzw. Beschichtungskabinen beschränkt, die zum Beschichten von Werkstücken mit pulverförmigem Beschichtungsmaterial dienen. Vielmehr betrifft die Erfindung auch entsprechende Anlagen bzw. Systeme oder Beschichtungskabinen zum Beschichten von Werkstücken mit Beschichtungspulver.

Eine Beschichtungsanlage der hierin berücksichtigten Art weist üblicherweise eine Kabine (Beschichtungskabine) mit Seitenwänden auf, durch die eine oder mehrere Pulversprühpistolen in das Innere der Kabine ragen. Das zu beschichtende Werkstück wird üblicherweise an einer Förderbahn beispielsweise hängend durch die Beschichtungskabine transportiert und dabei mit den Pulversprühpistolen mit Pulver besprüht. Anschließend wird das Werkstück in eine Wärmekammer transportiert. Die Pulverschicht wird in der Wärmekammer so weit erhitzt, dass sie sich verflüssigt und eine geschlossene Schicht auf dem Werkstück bildet.

Beschichtungskabinen zum Beschichten von Werkstücken, insbesondere mit Beschichtungspulver, sind allgemein aus dem Stand der Technik bekannt. Derartige Beschichtungskabinen weisen in der Regel eine Beschichtungskammer mit einem Kabinenboden, zwei einander gegenüberliegende Werkstückdurchgänge sowie eine Fördervorrichtung zum Transportieren von Werkstücken durch die Beschichtungskammer auf.

Beispielsweise betrifft die Druckschrift EP 0 071 756 A2 eine Beschichtungskabine mit einer Fördervorrichtung, welche die zu beschichtenden Gegenstände über einen Eingang und einen Ausgang durch den Kabineninnenraum transportiert. Eine Sprühvorrichtung der Kabine ist hierbei ein durch Türen zu öffnendes Wandelement mit einer Handspritzpistole. Es können jedoch auch automatisch gesteuerte Spritzpistolen vorgesehen sein. Die Türen ermöglichen auch den Zugang in den Kabineninnenraum. Die Sprühvorrichtungen mit den Spritzpistolen können alle auf die gleiche Kabinenseite angeordnet sein. Es können auch auf der gegenüberliegenden Seite Sprühvorrichtungen in Form von vorbereiteten Wandelementen mit Schlitzen zum Hindurchführen von Pistolen vorgesehen sein.

An Stelle einer Fördervorrichtung zum automatischen Transport der zu beschichtenden Gegenstände durch den Kabineninnenraum können die zu beschichtenden Gegenstände auch manuell in den Kabineninnenraum eingebracht werden und - nach einem Beschichtungsvorgang - wieder entfernt werden.

Die Fördervorrichtung zum automatischen Transport der zu beschichtenden Gegenstände durch den Kabineninnenraum kann auch unterhalb des Kabinenbodens der Beschichtungskabine angeordnet sein und einen Werkstückträger aufweisen, welcher durch einen Förderschlitz im Kabinenboden in die Beschichtungskammer der Beschichtungskabine hineinragt.

Beschichtungskabinen mit derartigen "Flurförderern" werden insbesondere bei der Beschichtung von hochwertigen Werkstücken eingesetzt, da durch die Anordnung der Fördervorrichtung unterhalb des Kabinenbodens eine hohe Beschichtungsqualität erreicht werden kann. Dies liegt insbesondere darin begründet, dass "klassische" Förderer zum hängenden Transport von Werkstücken durch die Beschichtungskammer ein Herabfallen von Schmutzteilchen oder Pulverresten von der Fördervorrichtung begünstigen können, was zu Unregelmäßigkeiten in der Beschichtung führen kann.

Andererseits sind insbesondere für die Pulverbeschichtung auch Kabinen bzw. Anlagen für den diskontinuierlichen Werkstücktransport bei Handbeschichtung bekannt, wobei sich dieser Kabinentyp von Durchlaufkabinen unterscheidet, die für den kontinuierlichen Werkstücktransport bei Hand- und/oder Automatikbeschichtung ausgebildet sind. Welcher dieser Grundtypen zum Einsatz gelangt, richtet sich im Wesentlichen nach dem Umfang der jeweiligen Beschichtungsaufgabe, also des vom Beschichter auszuführenden Auftrags.

Die Druckschrift EP 1 256 386 A2 betrifft eine Kabine zur Pulverbeschichtung von Werkstücken. Vor und hinter der Kabine ist jeweils ein Handbeschichtungsbereich angeordnet, um das Werkstück manuell beschichten zu können. Sollen kleine Losgrößen mit anderen Materialien oder Farbtönen beschichtet werden, sind also zunächst die Kabine und die Einrichtung zur Pulverrückgewinnung einer Reinigung zu unterziehen. Zur Reinigung der Kabine wird zuerst eine zwischen dem Handbeschichtungsbereich und der Kabine befindliche Schiebetür geschlossen. Dann wird das in der Kabine befindliche Pulver manuell entfernt und anschließend die Tür wieder geöffnet. Dieser Vorgang ist relativ aufwendig, kostet Zeit und ist auch nicht in jedem Fall praktikabel.

Andererseits ist aus der Druckschrift US 5,078,084 A ein System zum Beschichten von großen Werkstücken, wie z.B. von Fahrzeugteilen, mit Pulver bekannt. Dabei soll eine gleichmäßige Beschichtung der gesamten Fahrzeugkarosserie gewährleistet sein und ein Großteil des überschüssigen Pulvers soll gesammelt und zurückgewonnen werden. Das System umfasst einen automatischen Sprühbereich und einen Handbeschichtungsbereich. Das gesamte überschüssige Pulver, d.h. sowohl das überschüssige Pulver, das vom automatischen Sprühbereich stammt, und das überschüssige Pulver, das vom Handbeschichtungsbereich abgesaugt wird, wird einem Zyklonabscheider zugeführt.

Die Druckschrift EP 2 879 807 B1 betrifft eine Beschichtungskabine nach dem Oberbegriff des unabhängigen Patentanspruchs 1.

Die Druckschrift EP 2 275 209 A1 betrifft eine Kabine zum Beschichten von Werkstücken mit Pulver, wobei die Kabine einen Absaugkanal mit einer Absaugöffnung aufweist zum Absaugen von überschüssigem Pulver, sowie eine Wanne und eine darin angeordnete Walze aufweist. Die Wanne und die Walze bilden den Absaugkanal und die Absaugöffnung. Die Walze ist drehbar gelagert.

Die Druckschrift WO 1999/12658 A1 betrifft ferner eine Beschichtungskabine zur Pulverbeschichtung von Gegenständen.

Die Druckschrift US 2013/061886 A1 betrifft eine weitere Beschichtungskabine zur Pulverbeschichtung von Gegenständen.

Die Druckschrift DE 10 2020 113 645 A1 betrifft eine zum Beschichten von Werkstücken optimierte Beschichtungskabine bzw. Beschichtungszelle einer Beschichtungsanlage.

Die Druckschrift US 2003/127047 A1 betrifft eine Beschichtungskabine mit Abblasleisten.

Herkömmliche, aus dem Stand der Technik bekannte Beschichtungskabinen weisen im horizontalen Querschnitt in der Regel eine im Wesentlichen rechteckige Form auf. Bei diesen länglichen Beschichtungskabinen sind an den schmalen Stirnseiten Öffnungen oder Türen, so genannte Werkstückdurchgänge, vorgesehen, die für den Transport von Werkstücken durch die Kabine mittels einer Transportvorrichtung dienen. Ferner sind in den Seitenwänden der bekannten Beschichtungskabinen in der Regel Öffnungen oder Vertikalschlitze zum Einführen von Handsprühpistolen oder Automatiksprühpistolen in die Kabine vorgesehen, mit welchen die durch die Beschichtungskabine transportierten Werkstücke beschichtet werden können.

Bei den bekannten Kabinen fällt das versprühte, nicht am Werkstück haftende überschüssige Pulver zum größten Teil auf den Kabinenboden herab. Dieses nicht am Werkstück haftende überschüssige Pulver kann vom Kabinenboden abgesaugt und mittels Pulverabscheidung, insbesondere mittels eines Zyklonabscheiders und/oder Filterelementen, aus dem Absaugluftstrom getrennt werden, bevor es den Sprühvorrichtungen erneut zugeführt wird. Zum Absaugen des überschüssigen Pulvers ist üblicherweise vorgesehen, horizontal ausgerichtete Absaugschlitze im Kabinenboden vorzusehen.

Bei einem Pulverwechsel, beispielsweise Farbwechsel, müssen nicht nur sämtliche Kabineninnenflächen, sondern auch die zur Pulverrückgewinnung eingesetzten Zyklonabscheider und Filtereinrichtungen sowie die Pulverleitungen äußerst genau gereinigt werden, damit keine Pulverpartikel des zuerst verwendeten Pulvers mit dem danach verwendeten Pulver vermischt werden. Bereits einzelne Pulverpartikel können zu Beschichtungsfehlern auf dem Werkstück führen, welche die Beschichtung unbrauchbar machen.

Eine Rückgewinnung des Überschusspulvers reduziert zwar die Betriebskosten der Beschichtungskabine, geblieben ist jedoch weiterhin das Problem, dass bei einem Pulverwechsel bzw. Farbwechsel sehr viel Zeit zum Reinigen der Komponenten benötigt wird, wodurch lange Stillstandzeiten der Anlage entstehen. Hieraus ist ersichtlich, dass bei Vielfarbenbeschichtungen und dann, wenn Objekte mit verschiedenen Farben beschichtet werden sollen, der genannte Sprühbeschichtungsbetrieb mit Rückgewinnung des Überschusspulvers unrentabel wird und auf Verlust gefahren werden muss. "Auf Verlust fahren" bedeutet, dass das Überschusspulver nicht aufbereitet und wiederverwendet, sondern als Abfall weggeworfen wird, da das Reinigen umso schwerer und zeitaufwendiger ist, je mehr das Pulver sich in der Kabine und den anderen Teilen ablagern kann.

Der vorliegenden Erfindung liegt die Problemstellung zu Grunde, dass der Aufbau von herkömmlichen Beschichtungskabinen, bei denen überschüssiges Pulver mit Hilfe einer Bodenabsaugung abgeführt wird, nur bei relativ geringen Kabinenhöhen von max. 2,5 bis 3 m geeignet sind. Ab einer gewissen Kabinenhöhe hat die Bodenabsaugung keine Wirkung mehr insbesondere in den höheren Bereichen der Kabine, und ein Pulveraustritt ist die Folge davon.

Ein weiteres Problem der aus dem Stand der Technik bekannten und eingangs beschriebenen Beschichtungskabinen ist darin zu sehen, dass diese in der Regel nicht ohne Weiteres für den so genannten Roboterbetrieb geeignet sind, bei welchem ein oder mehrere Beschichtungsroboter außerhalb der Beschichtungskabine angeordnet sind, die entsprechende Automatikpistolen führen. Derartige Beschichtungsroboter benötigen einen relativ großen Bewegungsfreiraum, da mit Hilfe des Roboterarms die mindestens eine daran befestigte Automatikpistole vorzugsweise vollständig um das zu beschichtende Werkstück herumgeführt werden muss.

Der Einsatz von Beschichtungsrobotern bei herkömmlichen Beschichtungskabinen ist insofern nicht oder zumindest nicht ohne weiteres möglich, da herkömmliche Beschichtungskabinen in der Regel nur relativ kleine Schlitzöffnungen in den Wandelementen aufweisen, durch welche die Beschichtungspistolen hindurchgeführt werden.

Ausgehend von dieser Problemstellung liegt der Erfindung die Aufgabe zu Grunde, eine Beschichtungskabine zum Beschichten, insbesondere Pulverbeschichten von Werkstücken dahingehend weiterzubilden, dass zum einen die Beschichtungskabine für den Roboterbetrieb geeignet ist, wobei gleichzeitig der für einen Farbwechsel oder Pulverwechsel erforderliche Zeitaufwand reduziert werden kann, ohne auf eine gute Beschichtungsqualität verzichten zu müssen. Durch die Erfindung soll insbesondere erreicht werden, dass auch bei Beschichtungskabinen mit relativ großen Kabinenhöhen, insbesondere Kabinenhöhen über 2,5 bis 3 m, ein Ablagern von Pulverresten in der Kabine und an den anderen Teilen wirkungsvoll verhindert wird.

Die der Erfindung zu Grunde liegende Aufgabe wird insbesondere durch den Gegenstand des unabhängigen Patentanspruchs 1 gelöst.

Demgemäß betrifft die Erfindung insbesondere eine Beschichtungskabine zum Beschichten von Werkstücken mit Beschichtungsmaterial, insbesondere mit Beschichtungspulver, wobei der Beschichtungskabine eine Kabinenabsaugung zugeordnet ist zum insbesondere bedarfsweisen Absaugen von bei einem Beschichtungsvorgang anfallendem überschüssigen Beschichtungsmaterial. Die Beschichtungsmaterialabsaugung weist mindestens einen vertikal verlaufenden Absaugkanal auf, der strömungsmäßig mit einem Beschichtungsmaterial-Abscheidersystem verbunden oder verbindbar ist.

Erfindungsgemäß ist dabei insbesondere vorgesehen, dass der vertikal verlaufende Absaugkanal über zwei vertikal verlaufende Schlitzöffnungen mit einem Beschichtungsbereich der Beschichtungskabine in Fluidverbindung steht, wobei ein effektiver Strömungsquerschnitt der mit den beiden vertikal verlaufenden Schlitzöffnungen bereitgestellten Fluidverbindung in vertikaler Richtung des Absaugkanals insbesondere stetig variiert.

Dadurch, dass bei der erfindungsgemäßen Beschichtungskabine vorgesehen ist, dass der effektive Strömungsquerschnitt der mit den beiden vertikal verlaufenden Schlitzöffnungen bereitgestellten Fluidverbindung in vertikaler Richtung des Absaugkanals insbesondere stetig variiert, ist ein besonders homogener Absaugluftstrom innerhalb der Kabine realisierbar, so dass auch bei relativ hohen Kabinenhöhen effektiv überschüssiges Beschichtungsmaterial zuverlässig aus dem Kabineninneren entfernt werden kann. Auch dient der mit den beiden vertikal verlaufenden Schlitzöffnungen realisierbare Absaugluftstrom dazu, ein Herausdringen von überschüssigem Beschichtungsmaterial aus der Beschichtungskammer zu verhindern. Stattdessen wird mit dem Absaugluftstrom sogar außerhalb der Beschichtungskabine versprühtes Beschichtungsmaterial, wie beispielsweise bei einem manuellen Beschichtungsplatz, zumindest teilweise mitabgesaugt.

Gemäß einer bevorzugten Realisierung der erfindungsgemäßen Beschichtungskabine ist vorgesehen, dass der Absaugkanal einen ersten Endbereich und einen gegenüberliegenden zweiten Endbereich aufweist, wobei der Absaugkanal über einen der beiden Endbereiche strömungsmäßig mit einer Absaugvorrichtung verbunden ist. Dabei ist insbesondere vorgesehen, dass der effektive Strömungsquerschnitt der mit den beiden vertikal verlaufenden Schlitzöffnungen bereitgestellten Fluidverbindung in Richtung des einen der beiden Endbereiche des Absaugkanals, über den der Absaugkanal strömungsmäßig mit der Absaugvorrichtung verbunden ist, insbesondere stetig abnimmt.

Durch diese Ausgestaltung ist es möglich, dass über die vertikale Richtung gesehen die pro Zeiteinheit über die beiden vertikal verlaufenden Schlitzöffnungen abgesaugte Menge an überschüssigem Beschichtungsmaterial konstant ist.

In einer besonders leicht zu realisierenden aber dennoch effektiven Ausführungsvariante ist vorgesehen, dass die beiden vertikal verlaufenden Schlitzöffnungen jeweils die Form eines Dreiecks, insbesondere die Form eines rechtwinkligen Dreiecks, aufweisen.

Gemäß einem weiteren Aspekt der Erfindung betrifft diese eine Beschichtungskabine zum Beschichten von Werkstücken mit Beschichtungsmaterial, insbesondere mit Beschichtungspulver, wobei der Beschichtungskabine eine Kabinenabsaugung zugeordnet ist zum insbesondere bedarfsweisen Absaugen von bei einem Beschichtungsvorgang anfallendem überschüssigen Beschichtungsmaterial, wobei die Beschichtungsmaterialabsaugung mindestens einen vertikal verlaufenden Absaugkanal aufweist, der strömungsmäßig mit einem Beschichtungsmaterial-Abscheidersystem verbunden oder verbindbar ist.

Bei diesem (weiteren) Aspekt der Erfindung ist insbesondere vorgesehen, dass der vertikal verlaufende Absaugkanal über zwei vertikal verlaufende Schlitzöffnungen mit einem Beschichtungsbereich der Beschichtungskammer in Fluidverbindung steht, wobei ein effektiver Strömungsquerschnitt der mit den beiden vertikal verlaufenden Schlitzöffnungen bereitgestellten Fluidverbindung variabel einstellbar ist.

Insbesondere ist der effektive Strömungsquerschnitt der mit den beiden vertikal verlaufenden Schlitzöffnungen bereitgestellten Fluidverbindung auf einen ersten Wert einstellbar, welcher an einen Beschichtungsbetrieb der Beschichtungskabine angepasst ist, und an einen im Vergleich zum ersten Wert größeren zweiten Wert einstellbar, welcher an einen Reinigungsbetrieb der Beschichtungskabine angepasst ist.

Bei dieser Ausgestaltung der erfindungsgemäßen Beschichtungskabine ist somit im Beschichtungsbetrieb der Beschichtungskabine über die gesamte Höhe der Beschichtungskabine eine gleichmäßige laminare Absaugung realisierbar, die so gewählt ist, dass der Beschichtungsbetrieb nicht gestört wird. Wenn hingegen beispielsweise bei einem Farbwechsel die Beschichtungskabine zu reinigen ist, kann der effektive Strömungsquerschnitt der mit den beiden vertikal verlaufenden Schlitzöffnungen bereitgestellten Fluidverbindung auf einen größeren, zweiten Wert eingestellt werden. Dadurch sind ein erhöhter Luftaustausch und ein effektives Absaugen von überschüssigem Pulver möglich.

Hierzu ist erfindungsgemäß vorgesehen, dass dem vertikal verlaufenden Absaugkanal eine sich in vertikaler Richtung erstreckende Klappe zugeordnet ist, welche zumindest bereichsweise den Absaugkanal von dem Beschichtungsbereich der Beschichtungskabine räumlich trennt. Vorzugsweise werden dabei die beiden vertikal verlaufenden Schlitzöffnungen jeweils durch eine vertikale Spaltöffnung zwischen der Klappe und einer Wandung des Absaugkanals gebildet.

In diesem Zusammenhang bietet es sich an, dass die Klappe eine Querschnittsgeometrie aufweist, die zumindest im Wesentlichen der Querschnittsgeometrie eines gleichschenkligen Dreiecks entspricht, wobei die der Basis des gleichschenkligen Dreiecks entsprechende Fläche der Klappe dem Beschichtungsbereich der Beschichtungskabine zugewandt ist.

Mit dieser Ausgestaltung wird mit den vertikal verlaufenden Schlitzöffnungen eine Düsenfunktion realisiert, so dass besonders effektiv überschüssiges Beschichtungsmaterial aus dem Kabineninneren absaugbar ist.

Gemäß der Erfindung ist ferner vorgesehen, dass die sich in vertikaler Richtung erstreckende Klappe um eine in vertikaler Richtung verlaufende Achse relativ zu dem Absaugkanal verschwenkbar gelagert ist.

Vorzugsweise ist dabei die sich in vertikaler Richtung erstreckende Klappe zwischen einer ersten Stellung, in welcher ein erster an einen Beschichtungsbetrieb der Beschichtungskabine angepasster effektiver Strömungsquerschnitt der mit den beiden vertikal verlaufenden Schlitzöffnungen bereitgestellten Fluidverbindung eingestellt ist, und mindestens einer zweiten Stellung verschwenkbar, in welcher ein erster an einen Reinigungsbetrieb der Beschichtungskabine angepasster effektiver Strömungsquerschnitt der mit den beiden vertikal verlaufenden Schlitzöffnungen bereitgestellten Fluidverbindung eingestellt ist.

In einer besonders leicht zu realisierenden aber dennoch effektiven Weise ist der Klappe ein insbesondere elektromotorischer oder pneumatischer Antrieb zugeordnet, welcher ausgebildet ist, bedarfsweise die Stellung der Klappe relativ zu dem Absaugkanal zu verändern oder einzustellen.

Gemäß einem weiteren Aspekt der vorliegenden Erfindung betrifft diese eine Beschichtungskabine der zuvor genannten erfindungsgemäßen Art oder gemäß dem Oberbegriff von Anspruch 1, wobei bei diesem weiteren Aspekt der Erfindung insbesondere vorgesehen ist, dass der vertikal verlaufende Absaugkanal über eine erste, am oberen Endbereich des Absaugkanals vorgesehene horizontale Schlitzöffnung und über eine zweite, am unteren Endbereich des Absaugkanals vorgesehene horizontale Schlitzöffnung mit dem Absaugkanal in Fluidverbindung steht.

Dabei ist insbesondere vorgesehen, dass der Absaugkanal über seinen oberen Endbereich oder über seinen unteren Endbereich strömungsmäßig mit einer Absaugvorrichtung verbunden ist.

In diesem Zusammenhang bietet es sich an, dass ein effektiver Strömungsquerschnitt der horizontalen Schlitzöffnung, die an dem Endbereich des Absaugkanals vorgesehen ist, über den der Absaugkanal mit der Absaugvorrichtung strömungsmäßig verbunden ist, kleiner ist als ein effektiver Strömungsquerschnitt der anderen horizontalen Schlitzöffnung.

Die horizontalen Schlitzöffnungen bilden dabei horizontal ausgerichtete Absaugschlitze, d.h. Absaugschlitze, welche sich horizontal, d.h. in der Ebene des Kabinenbodens, erstrecken.

Um die Beschichtungskabine insbesondere für den Roboterbetrieb auszulegen, ist gemäß einer Ausführungsvariante der Erfindung vorgesehen, dass die Beschichtungskabine eine einen Beschichtungsbereich der Beschichtungskabine zumindest bereichsweise festlegende Beschichtungskammer mit einem Kabinenboden sowie mit mindestens einer vertikal verlaufenden Seitenwand aufweist, wobei der vertikal verlaufende Absaugkanal der Kabinenabsaugung in einem Eckbereich der Beschichtungskabine ausgebildet ist.

In diesem Zusammenhang ist es insbesondere denkbar, dass in einer Draufsicht auf den Kabinenboden der Kabinenboden eine polygonale Fläche bildet, insbesondere mit einem zumindest im Wesentlichen rechteckförmigen Bereich, der im Wesentlichen den Beschichtungsbereich der Beschichtungskabine ausbildet, und mit einem sich an einer Seite des rechteckförmigen Bereichs anschließenden und in Richtung eines Eckbereichs konvergierenden Bereich, wobei der vertikal verlaufende Absaugkanal der Kabinenabsaugung in dem Eckbereich ausgebildet ist, in Richtung dessen der sich an dem zumindest im Wesentlichen rechteckförmigen Bereich anschließenden Bereich konvergiert.

Durch das Vorsehen eines derartigen konvergierenden Bereichs, in dessen Eckbereich der vertikal verlaufende Absaugkanal der Kabinenabsaugung ausgebildet ist, ist sichergestellt, dass in dem eigentlichen Beschichtungsbereich, der im Wesentlichen durch den rechteckförmigen Bereich der Kabine gebildet wird, eine homogene Luftabsaugung realisierbar ist. Andererseits wird durch diese Ausgestaltung der Beschichtungskabine ein optimaler Bewegungsfreiraum für die Roboterbeschichtung garantiert.

Gemäß Weiterbildungen der zuletzt genannten Ausführungsform ist vorgesehen, dass der zumindest im Wesentlichen rechteckförmige Bereich des Kabinenbodens in einem Eckbereich des im Wesentlichen rechteckförmigen Bereichs ohne zumindest vollständig geschlossene vertikal verlaufende Seitenwände ausgebildet ist, wobei außerhalb des zumindest im Wesentlichen rechteckförmigen Bereichs des Kabinenbodens und bei dem Eckbereich ohne die zumindest vollständig geschlossenen vertikal verlaufenden Seitenwänden ein Beschichtungsroboter-Platz für mindestens einen Beschichtungsroboter vorgesehen ist.

In diesem Zusammenhang bietet es sich an, dass der Kabinenboden einen in einer Draufsicht auf den Kabinenboden trichterförmigen und in Richtung des Eckbereichs geneigten Bodenbereich sowie an den trichterförmigen und in Richtung des Eckbereichs geneigten Bodenbereich anschließende Seitenwände aufweist, welche jeweils in Richtung des trichterförmigen und in Richtung des Eckbereichs geneigten Bodenbereichs geneigt sind. Dadurch wird sichergestellt, dass überschüssiges Beschichtungsmaterial, welches auf den Kabinenboden herunterfällt, durch Schwerkraft in Richtung der Kabinenabsaugung bewegt wird.

Insbesondere bietet es sich bei der erfindungsgemäßen Beschichtungskabine an, dass die Kabinenabsaugung ferner mindestens einen am Kabinenboden angeordneten, horizontal ausgerichteten Absaugschlitz aufweist, der vorzugsweise über einen dem mindestens einen am Kabinenboden angeordneten, horizontal ausgerichteten Absaugschlitz zugeordneten Absaugkanal strömungsmäßig mit dem vertikal verlaufenden Absaugkanal in Verbindung steht.

Der erfindungsgemäßen Beschichtungskabine ist vorzugsweise eine Fördervorrichtung zum Transport der zu beschichtenden Werkstücke durch die von der Beschichtungskabine definierte Beschichtungskammer zugeordnet. Dabei kann eine von der Fördervorrichtung vorgegebene Förderstrecke insbesondere parallel zu einer Seite des rechteckförmigen Bereichs und senkrecht zu dem in Richtung des Eckbereichs konvergierenden Bereichs verlaufen.

Der Kabinenboden der Beschichtungskabine weist insbesondere einen wannen-, trog- oder muldenförmigen Innenbereich mit mindestens einer in Richtung einer Absaugöffnung oder in Richtung eines Absaugkanals geneigten oder gekrümmten Fläche auf.

In diesem Zusammenhang ist es denkbar, dass der Kabinenboden ferner einen rahmenförmigen Außenbereich aufweist, von welchem der mindestens eine wannen-, trog- oder muldenförmige Innenbereich zumindest bereichsweise aufgenommen ist.

Gemäß einem Aspekt der Erfindung ist vorgesehen, dass der Kabinenboden ein integriertes Absaugsystem aufweist zum insbesondere bedarfsweisen Absaugen und/oder Abführen von überschüssigem Beschichtungsmaterial im Beschichtungsbetrieb der Beschichtungskabine, welches sich auf den Kabinenboden absetzt.

Unter dem hierin verwendeten Begriff "überschüssigem Beschichtungsmaterial" ist so genanntes "Overspray-Material" zu verstehen, d.h. Beschichtungsmaterial, welches nicht an dem zu beschichtenden Werkstück appliziert werden konnte, oder welches bereits mindestens einmal während eines Beschichtungsvorgangs versprüht wurde und entsprechend recycelt ist. Derartiges Overspray-Pulver wird gelegentlich auch als "Recovery"-Material bezeichnet.

Über den vertikal verlaufenden Absaugkanal, der über die zwei vertikal verlaufenden Schlitzöffnungen mit dem Beschichtungsbereich der Beschichtungskabine in Fluidverbindung steht, ist ein besonders homogener Absaugluftstrom innerhalb der Beschichtungskabine erzeugbar, infolgedessen auch über die gesamte Höhe der Beschichtungskabine überschüssiges Beschichtungsmaterial zuverlässig entfernt werden kann.

Durch die Anordnung des vertikal verlaufenden Absaugkanals in dem Eckbereich des konvergierenden Bereichs der Beschichtungskabine kann ein Absaugluftstrom generiert werden, welcher in allen Teilbereichen der Beschichtungskabine gleichstark ist. Darüber hinaus ergibt sich durch die besondere Ausgestaltung der beiden vertikal verlaufenden Schlitzöffnungen des vertikal verlaufenden Absaugkanals ein vorteilhaftes, breites Geschwindigkeitsprofil des Absaugluftstroms, wodurch dieser einen maximalen Einzugbereich aufweist.

Nach einer weiteren Umsetzung kann die erfindungsgemäße Beschichtungskabine ferner mindestens einen Handbeschichtungsbereich aufweisen, welcher vor und/oder hinter der Beschichtungskabine neben einem Werkstückdurchgang angeordnet ist.

Durch die Ausstattung der erfindungsgemäßen Beschichtungskabine mit mindestens einem und vorzugsweise zwei Handbeschichtungsbereichen kann der mindestens eine vertikal verlaufende Absaugkanal mit den beiden vertikal verlaufenden Schlitzöffnungen auch dazu verwendet werden, auch die Beschichtungsmaterialreste des Handbeschichtungsbereichs abzusaugen. Demzufolge bedarf es bei der erfindungsgemäßen Beschichtungskabine keiner weiteren Absaugvorrichtung, welche speziell für den Handbeschichtungsbereich vorgesehen ist. Vielmehr kann der ohnehin erzeugte Absaugluftstrom des vertikal verlaufenden Absaugkanals dazu verwendet werden, den gesamten Handbeschichtungsbereich mitabzudecken.

Der vertikal verlaufende Absaugkanal und die beiden vertikal verlaufenden Schlitzöffnungen erstrecken sich vorzugsweise vom Kabinenboden bis zu einem Deckenbereich der Beschichtungskammer. Insbesondere sind die vertikal verlaufenden Schlitzöffnungen durchgehend ausgestaltet, so dass ein besonders homogener Absaugluftstrom im gesamten Bereich der Beschichtungskabine generiert wird.

Durch die Ausbildung der beiden vertikal verlaufenden Schlitzöffnungen, die in dem Endbereich des vertikal verlaufenden Absaugkanals, der mit der Absaugvorrichtung strömungsmäßig verbunden ist, einen geringeren effektiven Querschnitt aufweisen als im gegenüberliegenden Bereich, entsteht in vorteilhafter Weise ein besonders homogener Luftstrom. Dies liegt darin begründet, dass in dem Bereich des vertikal verlaufenden Absaugkanals, der mit der Absaugvorrichtung strömungsverbunden ist, ein höherer Saugluftstrom existiert im Vergleich zu dem gegenüberliegenden Endbereich des vertikal verlaufenden Absaugkanals. Durch die unterschiedlichen Öffnungsquerschnitte der vertikal verlaufenden Schlitzöffnungen kann dies jedoch kompensiert werden.

Gemäß Ausgestaltungen der erfindungsgemäßen Beschichtungskabine ist nur der sich an einer Seite des rechteckförmigen Bereichs des Kabinenbodens anschließende und in Richtung eines Eckbereichs konvergierende Bereich des Kabinenbodens mit entsprechenden Seitenwänden versehen. Da andererseits in dem Eckbereich der vertikal verlaufende Absaugkanal mit den beiden vertikal verlaufenden Schlitzöffnungen vorgesehen ist, erfolgt über die Absaugung eine effektive Reinigung der gesamten Seitenwände der Beschichtungskabine.

Nach einer Ausführungsform kann der vertikal verlaufende Absaugkanal einen im Wesentlichen rechteckförmigen Querschnitt aufweisen. Dabei ist eine Seitenwand des vertikal verlaufenden Absaugkanals mit der Klappe gebildet. Ferner können Serviceklappen vorgesehen sein.

Auch ist es denkbar, dass die Klappe derart relativ zu dem Absaugkanal verschwenkt wird bzw. werden kann, dass dadurch auf einfache Weise der mindestens eine vertikal verlaufende Absaugkanal beispielsweise zum Farbwechsel gereinigt werden kann. Dafür ist es dementsprechend lediglich erforderlich, die Klappe in die mindestens eine zweite Position zu verfahren und den Innenraum des vertikal verlaufenden Absaugkanals mit Druckluft bzw. Spülflüssigkeit zu reinigen.

Es ist weiterhin vorzugsweise vorgesehen, dass die Beschichtungskabine einen unterhalb des Kabinenbodens angeordneten Absaugbereich aufweist, welcher mit mindestens einer Absaugvorrichtung verbunden ist. Die Absaugvorrichtung ist ausgebildet, das von den vertikal und den horizontal ausgerichteten Absaugschlitzen abgesaugte, überschüssige Beschichtungsmaterial abzuführen.

Mit anderen Worten, kann somit über den gemeinsamen Absaugbereich das über die vertikalen und horizontalen Absaugschlitze abgesaugte Überschusspulver gleichzeitig ausgetragen werden. Es bedarf somit vorzugsweise nur einer Absaugvorrichtung zum Erzeugen der entsprechenden Absaugluftströme.

Gemäß einer Ausführungsvariante der erfindungsgemäßen Beschichtungskabine kann diese mindestens eine Luftblasvorrichtung aufweisen, welche entlang des Kabinenbodens angeordnet und ausgebildet ist, überschüssiges Beschichtungsmaterial in Richtung eines horizontal verlaufenden Absaugschlitzes zu blasen. Die mindestens eine Luftblasvorrichtung ist dabei vorzugsweise gegenüber dem vertikal verlaufenden Absaugkanal angeordnet.

Der mindestens eine vertikal verlaufende Absaugkanal ist vorzugsweise dazu ausgebildet, einen Saugluftstrom von 3.000 bis 10.000 m³/h durch die entsprechenden vertikal ausgerichteten Schlitzöffnungen zu erzeugen. Dagegen können die optional vorgesehenen horizontal am Kabinenboden verlaufenden Absaugschlitze vorzugsweise jeweils dazu ausgebildet sein, einen Saugluftstrom von 5.000 bis 13.000 m³/h zu erzeugen.

Es ist denkbar, die Beschichtungskabine mit zwei oder drei horizontal verlaufenden Absaugschlitzen auszubilden, welche sich in Transportrichtung der zu beschichtenden Werkstücke entlang des Kabinenbodens zwischen den Werkstückdurchgängen erstrecken.

Die vorliegende Erfindung ist nicht auf Beschichtungskabinen beschränkt, welche bei einem reinen Roboterbetrieb zum Einsatz kommen. Vielmehr ist auch ein Mischbetrieb denkbar. Auch ist ein Betrieb mit mehreren Beschichtungsrobotern denkbar, die beispielsweise übereinander in zwei beabstandeten horizontalen Ebenen angeordnet sind.

Insbesondere ist die erfindungsgemäße Beschichtungskabine für einen Beschichtungsbetrieb geeignet, bei welchem mindestens ein Beschichtungsroboter zum Einsatz kommt, wobei der Roboterarm des mindestens einen Beschichtungsroboters mit einer an dem Roboterarm angeordneten Sprühvorrichtung über den Eckbereich der Beschichtungskabine, der ohne zumindest vollständig geschlossene vertikal verlaufende Seitenwände ausgebildet ist, in das Innere der Beschichtungskabine einführbar oder dort positionierbar bzw. hinsichtlich des zu beschichtenden Gegenstands ausrichtbar ist. Dabei kann zusätzlich zu solch einem Beschichtungsroboter bei dem rechteckförmigen Bereich der Kabine ein Handbeschichterplatz vorgesehen sein. Sowohl der Handbeschichterplatz als auch der Beschichtungsroboter können dabei außerhalb der eigentlichen Kabine platziert sein.

Beispielsweise ist es denkbar, dass die erfindungsgemäße Beschichtungskabine für einen Handbeschichter auf einer außerhalb der Kabine stehenden Hebebühne zum Einsatz kommt, um bei hohen Teilen entsprechend die zu beschichtenden Flächen erreichen zu können. Auch sind mehrere übereinander platzierte Handbeschichterplätze denkbar.

Insbesondere ist eine Kombination aus mindestens einem Beschichtungsroboter und einem Handbeschichterplatz vorstellbar.

Ferner kann beispielsweise mit Hilfe eines ersten Beschichtungsroboters der untere Teil des Werkstücks beschichtet werden, während ein weiterer Beschichtungsroboter, der über dem ersten Beschichtungsroboter angeordnet ist, für den oberen Teil des Werkstücks zuständig ist.

Nachfolgend werden unter Bezugnahme auf die beiliegenden Zeichnungen exemplarische Ausführungsformen der Erfindung näher beschrieben.

Es zeigen:
- FIG. 1: schematisch und in einer isometrischen Ansicht eine exemplarische Ausführungsform einer Beschichtungsanlage zum Beschichten von Werkstücken mit Beschichtungsmaterial (hier: Beschichtungspulver), wobei bei der gezeigten Ausführungsform der Beschichtungsanlage zwei hintereinander angeordnete Beschichtungskabinen jeweils gemäß einer exemplarischen Ausführungsform der Erfindung zum Einsatz kommen;
- FIG. 2: schematisch und in einer isometrischen Ansicht die Beschichtungskabinen der Beschichtungsanlage gemäß FIG. 1;
- FIG. 3: schematisch und in einer Draufsicht die Beschichtungskabinen gemäß FIG. 2;
- FIG. 4: schematisch und in einer Seitenansicht die Beschichtungskabinen gemäß FIG. 2;
- FIG. 5: schematisch und in einer isometrischen Ansicht eine Weiterbildung der exemplarischen Ausführungsform einer der beiden Beschichtungskabinen gemäß FIG. 2;
- FIG. 6: schematisch und in einer Draufsicht die Ausführungsform der Beschichtungskabine gemäß FIG. 5;
- FIG. 7a: schematisch und in einer Draufsicht eine exemplarische Ausführungsform einer Klappe eines vertikalen Absaugkanals der Beschichtungskabine gemäß FIG. 2;
- FIG. 7b: schematisch und in einer Seitenansicht die Klappe gemäß FIG. 7a in einer Seitenansicht;
- FIG. 7c: schematisch und in einer Rückansicht die Klappe gemäß FIG. 7a;
- FIG. 7d: schematisch und in einer Draufsicht auf die Klappe gemäß FIG. 7a;
- FIG. 8: schematisch und in einer Draufsicht eine weitere exemplarische Ausführungsform der erfindungsgemäßen Beschichtungskabine; und
- FIG. 9: schematisch und in einer isometrischen Ansicht eine weitere exemplarische Ausführungsform einer Beschichtungsanlage zum Beschichten von Werkstücken mit Beschichtungsmaterial (hier: Beschichtungspulver), wobei bei der gezeigten Ausführungsform der Beschichtungsanlage zwei hintereinander angeordnete Beschichtungskabinen jeweils gemäß einer exemplarischen Ausführungsform der Erfindung zum Einsatz kommen.

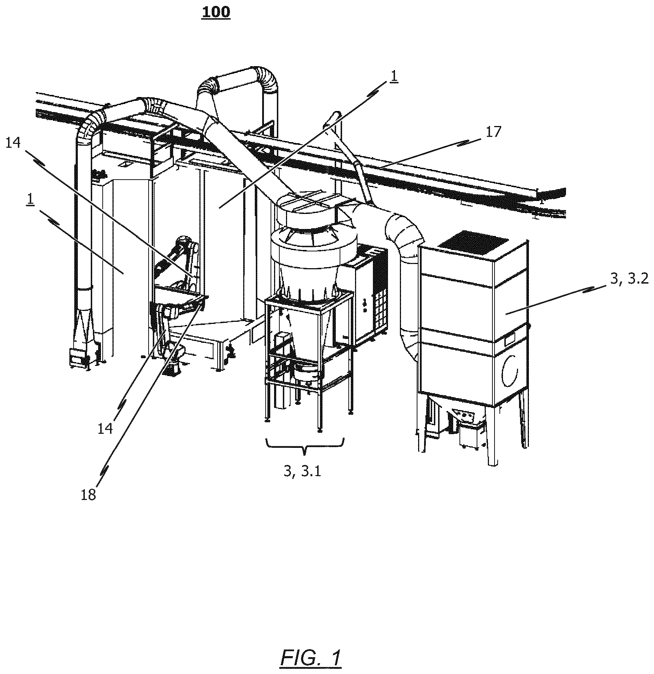

FIG. 1 zeigt schematisch und in einer isometrischen Ansicht eine exemplarische Ausführungsform einer Beschichtungsanlage 100 zum Pulverbeschichten von Werkstücken.

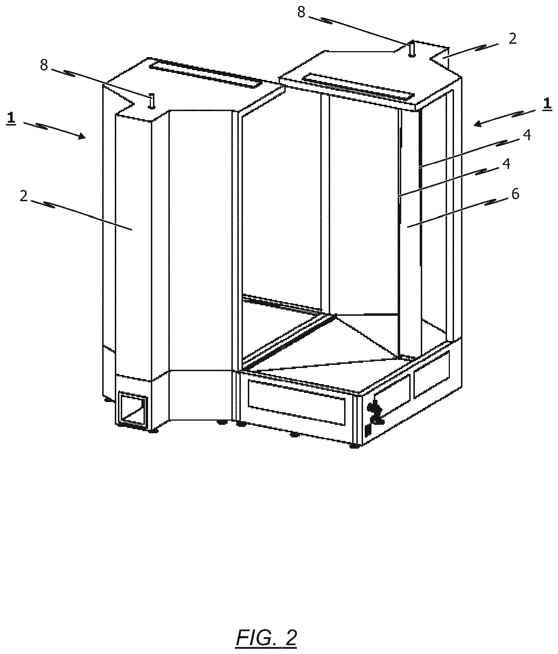

Die Beschichtungsanlage 100 weist zwei hintereinander angeordnete Beschichtungskabinen 1 gemäß einer Ausführungsform der vorliegenden Erfindung auf, wobei die beiden Beschichtungskabinen 1 um 180° gedreht zueinander angeordnet sind. Einzelheiten der Beschichtungskabinen 1 werden anschließend unter Bezugnahme auf die Darstellungen in FIG. 2 bis FIG. 6 näher beschrieben.

Bei der Beschichtungsanlage 100 gemäß FIG. 1 sind die beiden Beschichtungskabinen 1 so angeordnet, dass diese zwei einander diametral gegenüberliegend angeordnete Objekt-Durchgänge für den Transport von zu beschichtenden Werkstücken durch die Pulverbeschichtungskabinen 1 aufweisen. Die Breite der Objekt-Durchgänge begrenzt die maximale Breite des Objekt-Transportwegs, d.h. die maximale Breite der in den Beschichtungskabinen 1 beschichtbaren Werkstücke.

Außerhalb jeder Beschichtungskabine 1 sind seitlich jeweils bei einem Eckbereich der Beschichtungskabine 1 Beschichtungsroboter 14 angeordnet, welche jeweils mindestens eine Sprühvorrichtung 18 tragen, die über einen Roboterarm in den Innenbereich der jeweiligen Beschichtungskabine 1 eingeführt und positioniert werden können, um im Kabineninnenraum der entsprechenden Beschichtungskabine 1 einen Gegenstand mit Pulver beschichten zu können.

Der zu beschichtende Gegenstand wird von einer Transportvorrichtung 17, beispielsweise einer endlosen Förderkette, quer zur Längsrichtung der Beschichtungsroboter 14 durch die Beschichtungskabinen 1 transportiert.

Die Sprühvorrichtungen 18 weisen vorzugsweise eine oder mehrere Hochspannungselektroden zur elektrostatischen Aufladung des Beschichtungspulvers und einen Hochspannungserzeuger zur Erzeugung der Hochspannung für die Hochspannungselektroden auf.

Jede Beschichtungskabine 1 weist eine Absaugkanalanordnung auf, über welche Überschusspulver aus dem Kabineninnenraum absaugbar ist. Hierzu wird das beim Versprühen von Beschichtungspulver abfallende Überschusspulver durch mindestens einen vertikal verlaufenden Absaugkanal 2 und vorzugsweise durch mindestens einen Bodenlängsspalt abgesaugt. Der Absaugkanal 2 ist über ein Fluidleitungssystem an mindestens einen Pulverabscheider 3 zur Pulverrückgewinnung angeschlossen.

Bei der in FIG. 1 dargestellten exemplarischen Ausführungsform der Beschichtungsanlage 100 kommen als Pulverrückgewinnungsvorrichtung zwei in Reihe geschaltete Pulverabscheider 3 zur Rückgewinnung des aus den Kabineninnenräumen abgesaugten Überschusspulvers zum Einsatz. Zum einen ist ein hier als Zykloneinheit ausgebildeter erster Pulverabscheider 3.1 vorgesehen, der dazu dient, um Pulver aus dem aus den Kabineninnenräumen abgesaugten Pulver-Luft-Saugstrom abzuscheiden. Dabei ist ein als Filtereinheit ausgebildeter zweiter Pulverabscheider 3.2 strömungsmäßig dem Zyklonabscheider 3.1 nachgeschaltet.

Der Zyklonabscheider 3.1 hat einen Zyklon-Strömungseinlass und einen Zyklon-Luftauslass sowie auf dem Strömungsweg dazwischen eine Zyklonvorrichtung zum Abscheiden von Pulver aus dem Pulver-Luft-Saugstrom durch Zentrifugalkräfte.

Der Zyklon-Strömungseinlass ist am stromaufwärtigen Anfang einer Zyklonleitung (Rohr oder Schlauch) gebildet. Der Zyklon-Luftauslass ist an den als Nach-Filter dienenden und als Filtereinheit ausgebildeten Pulverabscheider 3.2 angeschlossen, welcher den Rest an Pulver, welcher von dem Zyklonabscheider 3.1 nicht abgeschieden werden kann, ausfiltert.

Das von dem Zyklonabscheider 3.1 aus dem Pulver-Luft-Strom ausgeschiedene Pulver fällt durch einen Zyklon-Pulverauslass am unteren Zyklonende in einen Sammelbehälter. Das Pulver des Sammelbehälters kann als Abfall behandelt oder in gleicher Weise aufbereitet und wieder zu den Sprühvorrichtungen 18 zurückgeführt werden, wie das Pulver des Pulverbehälters der nachgeschalteten Filtereinheit 3.2.

Die in FIG. 1 schematisch gezeigte exemplarische Ausführungsform der Pulverbeschichtungsanlage 100 zeichnet sich insbesondere dadurch aus, dass diese für Beschichtungsroboteranwendungen optimiert ist. Zu diesem Zweck kommen zwei hintereinander angeordnete und speziell für die Beschichtungsroboteranwendung konzipierte Beschichtungskabinen 1 zum Einsatz.

Bei der in FIG. 1 gezeigten exemplarischen Ausführungsform weisen die Beschichtungskabinen 1 eine Höhe von insbesondere über 4 m auf, um auch große Werkstücke entsprechend beschichten zu können. Die Beschichtung selber erfolgt vorzugsweise mit Hilfe der außerhalb der Kabinen 1 vorgesehenen Beschichtungsroboter 14, deren Roboterarme über Eckbereiche der Beschichtungskabine 1, die ohne Seitenwänden ausgebildet sind, in das Innere der Beschichtungskabine 1 hineingefahren werden können.

Dadurch, dass die am Roboterarbeitsplatz angrenzenden Seitenwände der Beschichtungskabine 1 offengelassen sind, ist eine besonders gute Manövrierfähigkeit der Roboterarme ermöglicht.

Andererseits erfordert die relativ offene Ausführungsform der Beschichtungskabinen 1 eine optimale Beschichtungsmaterialabsaugung. Dies wird erfindungsgemäß insbesondere durch ein optimiertes System realisiert, welches mindestens einen vertikal verlaufenden Absaugkanal 2 aufweist, der strömungsmäßig mit einem Beschichtungsmaterial-Abscheidersystem 3, insbesondere dem Zyklon-Abscheider 3.1 und dem nachgeschalteten Filter-Abscheider 3.2, verbunden oder verbindbar ist.

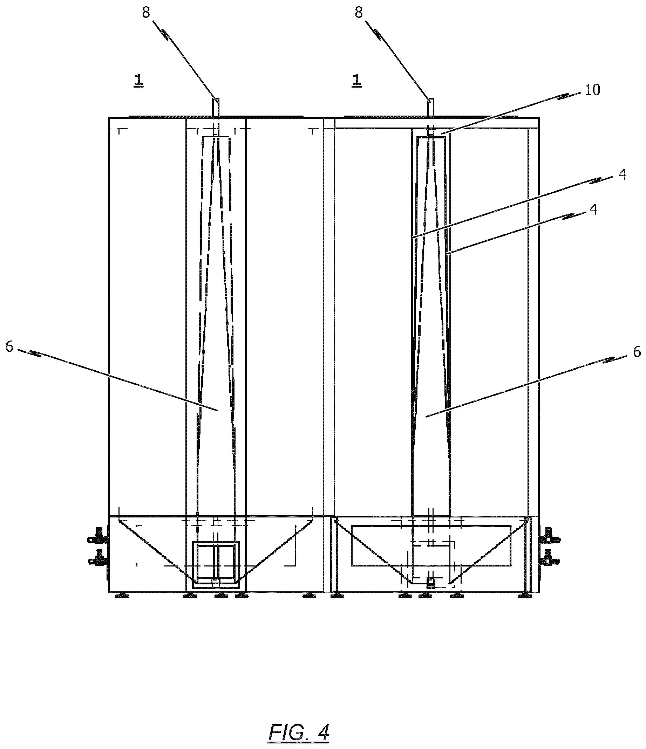

Wie es insbesondere auch den Detailansichten in FIG. 2 und FIG. 4 entnommen werden kann, steht der vertikal verlaufende Absaugkanal 2 der Beschichtungsmaterialabsaugung über zwei vertikal verlaufende Schlitzöffnungen 4 mit dem eigentlichen Beschichtungsbereich, d.h. mit dem Inneren der Beschichtungskabine 1, in Fluidverbindung.

Dabei ist vorgesehen, dass ein effektiver Strömungsquerschnitt der mit den beiden vertikal verlaufenden Schlitzöffnungen 4 bereitgestellten Fluidverbindung in vertikaler Richtung des Absaugkanals 2 insbesondere stetig variiert.

Im Einzelnen weist der Absaugkanal 2 einen ersten Endbereich auf, und einen gegenüberliegenden zweiten Endbereich auf, wobei der Absaugkanal 2 über einen der beiden Endbereiche strömungsmäßig mit einer Absaugvorrichtung verbunden ist. Bei den in den Zeichnungen gezeigten Ausführungsformen ist der untere Endbereich des Absaugkanals 2 mit der Absaugvorrichtung verbunden.

Dabei ist insbesondere vorgesehen, dass der effektive Strömungsquerschnitt der mit den beiden vertikal verlaufenden Schlitzöffnungen 4 bereitgestellten Fluidverbindung in Richtung des einen der beiden Endbereiche des Absaugkanals 2, über den der Absaugkanal 2 strömungsmäßig mit der Absaugvorrichtung verbunden ist, bei den in den Zeichnungen gezeigten Ausführungsformen also in Richtung des unteren Endbereichs des Absaugkanals 2, insbesondere stetig abnimmt.

Wie es der Detailansicht in FIG. 4 entnommen werden kann, weisen die beiden vertikal verlaufenden Schlitzöffnungen 4 jeweils die Form eines Dreiecks, insbesondere eines rechtwinkligen Dreiecks auf.

Gemäß einem Aspekt zeichnet sich die erfindungsgemäße Beschichtungskabine 1, die gemäß exemplarischen Ausführungsvarianten schematisch in den Zeichnungen gezeigt ist, dadurch aus, dass ein effektiver Strömungsquerschnitt der mit den beiden vertikal verlaufenden Schlitzöffnungen 4 bereitgestellten Fluidverbindung variabel einstellbar ist.

Im Einzelnen ist der Strömungsquerschnitt auf einen ersten Wert einstellbar, welcher an einen Beschichtungsbetrieb der Beschichtungskabine 1 angepasst ist, und mindestens einen weiteren zweiten Wert einstellbar, der im Vergleich zum ersten Wert größer ist, und der an einen Reinigungsbetrieb der Beschichtungskabine 1 angepasst ist.

Im Einzelnen ist bei den in den Zeichnungen gezeigten exemplarischen Ausführungsformen der erfindungsgemäßen Beschichtungskabine 1 dem vertikal verlaufenden Absaugkanal 2 eine sich in vertikaler Richtung erstreckende Klappe 6 zugeordnet, welche zumindest bereichsweise den Absaugkanal 2 von dem Beschichtungsbereich der Beschichtungskabine 1 räumlich trennt, wobei die beiden vertikal verlaufenden Schlitzöffnungen 4 jeweils durch eine vertikale Spaltöffnung zwischen der Klappe 6 und einer Wandung 7 des Absaugkanals 2 gebildet werden.

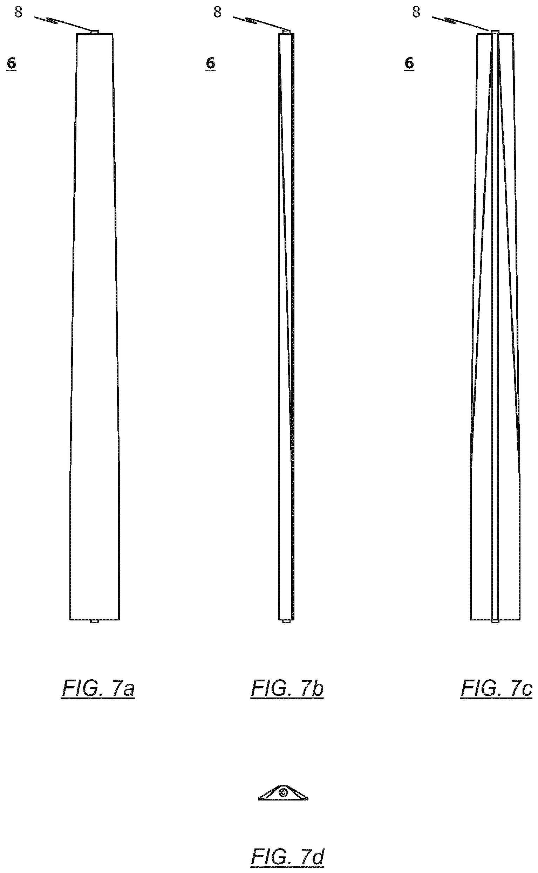

Eine Ausführungsform der Klappe 6 ist im Einzelnen in FIG. 7a bis FIG. 7d gezeigt.

Insbesondere weist dabei die Klappe 6 eine Querschnittsgeometrie auf, die zumindest im Wesentlichen der Querschnittsgeometrie eines gleichschenkligen Dreiecks entspricht, wobei die der Basis des gleichschenkligen Dreiecks entsprechenden Fläche der Klappe 6 dem Beschichtungsbereich der Beschichtungskabine 1, d.h. dem Innenbereich der Beschichtungskabine 1, zugewandt ist.

Die sich in vertikaler Richtung erstreckende Klappe 6 ist um eine in vertikaler Richtung verlaufende Achse 8 relativ zu dem Absaugkanal 2 verschwenkbar gelagert, und zwar insbesondere zwischen einer ersten Stellung, in welcher ein erster an einen Beschichtungsbetrieb der Beschichtungskabine 1 angepasster effektiver Strömungsquerschnitt der mit den beiden vertikal verlaufenden Schlitzöffnungen 4 bereitgestellten Fluidverbindung eingestellt ist, und mindestens einer zweiten Stellung, in welcher ein zweiter an einen Reinigungsbetrieb der Beschichtungskabine 1 angepasster effektiver Strömungsquerschnitt der mit den beiden vertikal verlaufenden Schlitzöffnungen 4 bereitgestellten Fluidverbindung eingestellt ist.

Zum Verstellen der Klappe 6 kann dieser ein insbesondere elektromotorischer, pneumatischer oder hydraulischer Antrieb zugeordnet sein, welcher ausgebildet ist, bedarfsweise die Stellung der Klappe 6 relativ zu dem Absaugkanal 2 zu verändern oder einzustellen.

Bei den Ausführungsformen der erfindungsgemäßen Beschichtungskabine 1 ist ferner vorgesehen, dass der vertikal verlaufende Absaugkanal 2 über eine erste, am oberen Endbereich des Absaugkanals 2 vorgesehene horizontale Schlitzöffnung 10 und eine zweite, am unteren Endbereich des Absaugkanals 2 vorgesehene horizontale Schlitzöffnung 10 mit dem Absaugkanal 2 in Fluidverbindung steht.

Dabei ist insbesondere vorgesehen, dass der Absaugkanal 2 über seinen unteren Endbereich mit der bereits erwähnten Absaugvorrichtung strömungsmäßig verbunden ist, wobei der effektive Strömungsquerschnitt der horizontalen Schlitzöffnung 10, die an dem unteren Endbereich des Absaugkanals 2 vorgesehen ist, kleiner ist als ein effektiver Strömungsquerschnitt der anderen (oberen) horizontalen Schlitzöffnung 10.

Bei den in den Zeichnungen gezeigten Ausführungsformen der erfindungsgemäßen Beschichtungskabine 1 ist ferner vorgesehen, dass die Beschichtungskabine 1 eine einen Beschichtungsbereich der Beschichtungskabine 1 zumindest bereichsweise festlegende Beschichtungskammer mit einem Kabinenboden 11 sowie mit mindestens einer vertikal verlaufenden Seitenwand aufweist, wobei der vertikal verlaufende Absaugkanal 2 der Kabinenabsaugung in einem Eckbereich der Beschichtungskabine 1 ausgebildet ist.

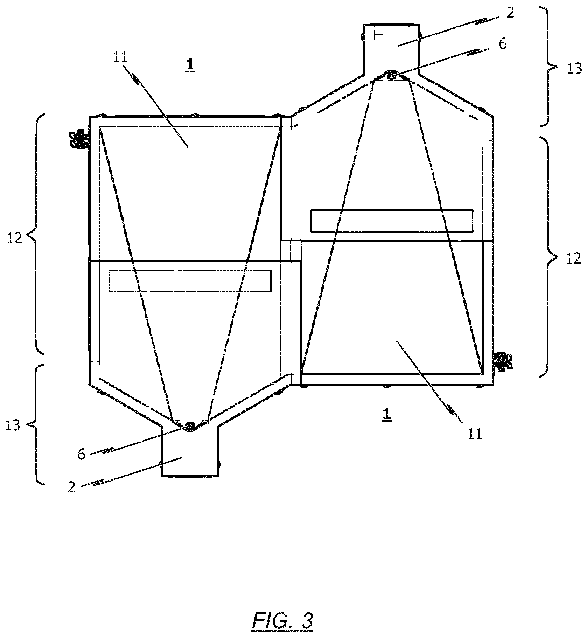

Insbesondere ist beispielsweise der Darstellung in FIG. 3 zu entnehmen, dass in einer Draufsicht auf den Kabinenboden 11 gesehen der Kabinenboden 11 eine polygonale Fläche bildet, insbesondere mit einem zumindest im Wesentlichen rechteckförmigen Bereich 12 und mit einem sich an einer Seite des rechteckförmigen Bereichs 12 anschließenden und in Richtung eines Eckbereichs konvergierenden Bereich 13, wobei der vertikal verlaufende Absaugkanal 2 der Kabinenabsaugung in dem Eckbereich ausgebildet ist, in dessen Richtung der sich an dem zumindest im Wesentlichen rechteckförmigen Bereich 12 anschließende Bereich konvergiert.

Der zumindest im Wesentlichen rechteckförmige Bereich 12 des Kabinenbodens 11 ist in einem Eckbereich des im Wesentlichen rechteckförmigen Bereichs 12 ohne vertikal verlaufende Seitenwände ausgebildet. Außerhalb des zumindest im Wesentlichen rechteckförmigen Bereichs 12 des Kabinenbodens 11 und bei dem Eckbereich ohne vertikal verlaufenden Seitenwänden ist ein Beschichtungsroboter-Platz für mindestens einen Beschichtungsroboter 14 vorgesehen.

Insbesondere ist bei den in den Zeichnungen gezeigten Ausführungsformen der erfindungsgemäßen Beschichtungskabine 1 vorgesehen, dass der Kabinenboden 11 einen in einer Draufsicht auf den Kabinenboden 11 trichterförmigen und in Richtung des Eckbereichs geneigten Bodenbereich sowie an den trichterförmigen und in Richtung des Eckbereichs geneigten Bodenbereich anschließende Seitenbereiche aufweist, welche jeweils in Richtung des trichterförmigen und in Richtung des Eckbereichs geneigten Bodenbereichs geneigt sind.

Die Kabinenabsaugung weist vorzugsweise ferner mindestens einen am Kabinenboden 11 angeordneten, horizontal ausgerichteten Absaugschlitz auf, der vorzugsweise über einen den mindestens einen am Kabinenboden 11 angeordneten, horizontal ausgerichteten Absaugschlitz zugeordneten Absaugkanal 2 strömungsmäßig mit dem vertikal verlaufenden Absaugkanal 2 in Verbindung steht.

Wie beispielsweise in FIG. 1 bis FIG. 4 dargestellt, ist es möglich, bei einer entsprechenden Beschichtungsanlage 100 zwei oder mehrere Beschichtungskabinen 1 hintereinander anzuordnen, wobei diese ggf. um 180° gegeneinander verdreht sind.

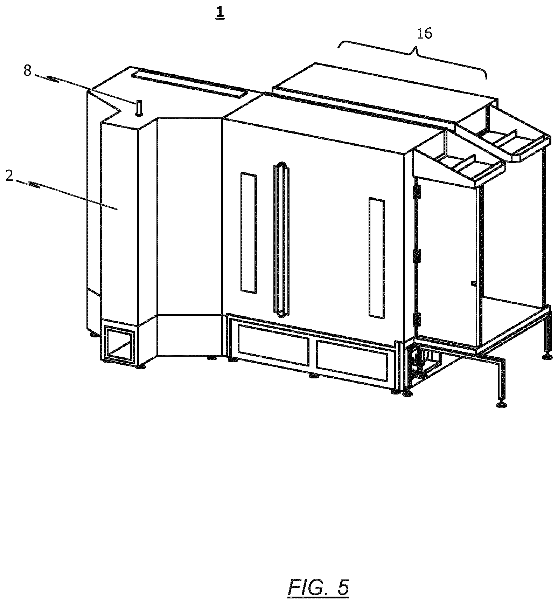

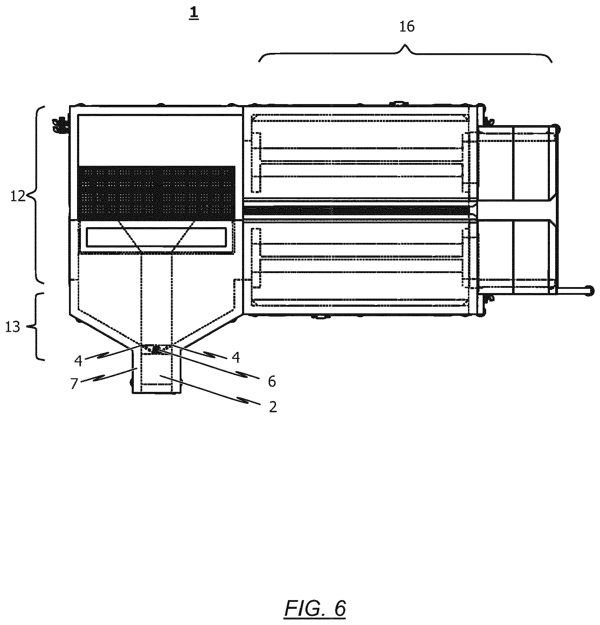

Auch ist es grundsätzlich denkbar, dass der Beschichtungskabine 1 ein Handbeschichtungsplatz oder Automatikbeschichtungsbereich 16 zugeordnet ist, wie es bei der Ausführungsform gemäß FIG. 5 und FIG. 6 der Fall ist.

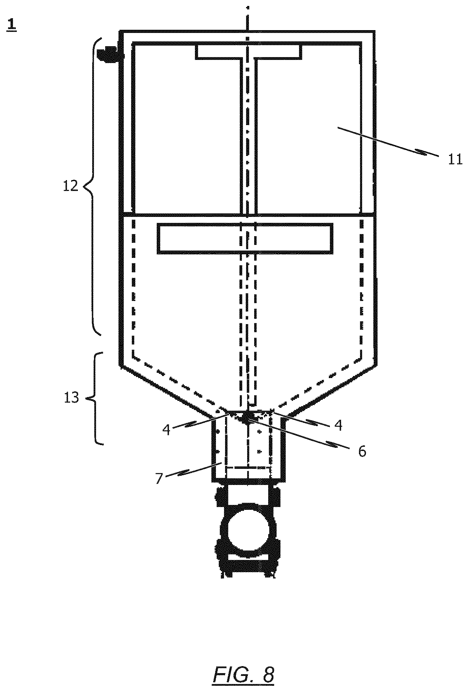

FIG. 8 zeigt schematisch und in einer Draufsicht eine weitere exemplarische Ausführungsform der erfindungsgemäßen Beschichtungskabine 1.

Wie in FIG. 8 angedeutet, ist die dort schematisch gezeigte Beschichtungskabine 1 mit einem vertikal verlaufenden Absaugkanal 2 versehen, welcher über zwei vertikal verlaufende Schlitzöffnungen 4 mit einem Beschichtungsbereich der Beschichtungskabine 1 in Fluidverbindung steht. Der Absaugkanal ist über einen seiner Endbereiche strömungsmäßig mit einer in FIG. 8 nicht gezeigten Absaugvorrichtung verbunden.

Wie auch bei den zuvor beschriebenen Ausführungsvarianten der erfindungsgemäßen Beschichtungskabine 1 ist die in FIG. 8 schematisch in einer Draufsicht gezeigte Beschichtungskabine 1 mit einer sich in vertikaler Richtung erstreckenden Klappe 6 versehen, welche zumindest bereichsweise den Absaugkanal 2 von dem Beschichtungsbereich 5 der Beschichtungskabine 1 räumlich trennt.

Die in FIG. 8 schematisch in einer Draufsicht gezeigte Beschichtungskabine unterscheidet sich von den zuvor beschriebenen Beschichtungskabinen insbesondere durch die entsprechend vorgesehene Bodenabsaugung. Im Einzelnen sind bei der Beschichtungskabine 1 gemäß FIG. 8 am Kabinenboden 11 horizontal ausgerichtete Absaugschlitze vorgesehen, die dazu dienen, das bei einem Beschichtungsvorgang anfallende überschüssige Beschichtungsmaterial, welches auf den Kabinenboden 11 gefallen ist, abzusaugen.

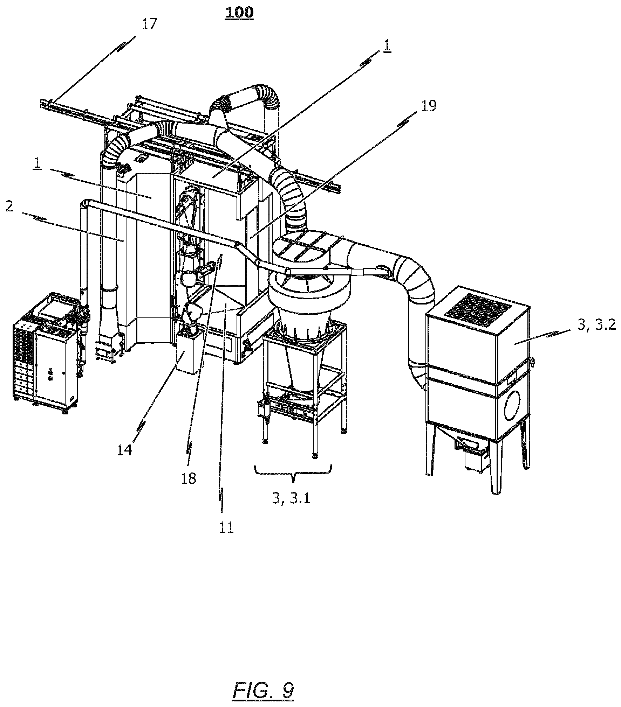

FIG. 9 zeigt schematisch und in einer isometrischen Ansicht eine weitere exemplarische Ausführungsform einer Beschichtungsanlage 100 zum Pulverbeschichten von Werkstücken.

Wie auch die in FIG. 1 gezeigte Ausführungsform weist die Beschichtungsanlage 100 gemäß FIG. 9 zwei hintereinander angeordnete Beschichtungskabinen 1 gemäß einer Ausführungsform der vorliegenden Erfindung auf, wobei die beiden Beschichtungskabinen 1 um 180° gedreht zueinander angeordnet sind. Einzelheiten der Beschichtungskabinen 1 wurden zuvor unter Bezugnahme auf die Darstellungen in FIG. 2 bis FIG. 6 näher beschrieben.

Bei der Beschichtungsanlage 100 gemäß FIG. 9 sind die beiden Beschichtungskabinen 1 so angeordnet, dass diese zwei einander diametral gegenüberliegend angeordnete Objekt-Durchgänge für den Transport von zu beschichtenden Werkstücken durch die Pulverbeschichtungskabinen 1 aufweisen. Die Breite der Objekt-Durchgänge begrenzt die maximale Breite des Objekt-Transportwegs, d.h. die maximale Breite der in den Beschichtungskabinen 1 beschichtbaren Werkstücke.

Außerhalb jeder Beschichtungskabine 1 sind seitlich jeweils bei einem Eckbereich der Beschichtungskabine 1 Beschichtungsroboter 14 angeordnet, welche jeweils mindestens eine Sprühvorrichtung 18 tragen, die über einen Roboterarm in den Innenbereich der jeweiligen Beschichtungskabine 1 eingeführt und positioniert werden können, um im Kabineninnenraum der entsprechenden Beschichtungskabine 1 einen Gegenstand mit Pulver beschichten zu können.

Der zu beschichtende Gegenstand wird von einer Transportvorrichtung 17, beispielsweise einer endlosen Förderkette, quer zur Längsrichtung der Beschichtungsroboter 14 durch die Beschichtungskabinen 1 transportiert.

Die in FIG. 9 schematisch gezeigte exemplarische Ausführungsform der Pulverbeschichtungsanlage 100 zeichnet sich insbesondere dadurch aus, dass diese für sowohl für Beschichtungsroboteranwendungen als auch für manuelle Beschichtungsanwendungen optimiert ist. Zu diesem Zweck kommen zwei hintereinander angeordnete und speziell konzipierte Beschichtungskabinen 1 zum Einsatz.

Bei der in FIG. 9 gezeigten exemplarischen Ausführungsform weisen die Beschichtungskabinen 1 eine Höhe von insbesondere über 4 m auf, um auch große Werkstücke entsprechend beschichten zu können. Die Beschichtung selber erfolgt vorzugsweise mit Hilfe der außerhalb der Kabinen 1 vorgesehenen Beschichtungsroboter 14, deren Roboterarme über Eckbereiche der Beschichtungskabine 1, die ohne Seitenwänden ausgebildet sind, in das Innere der Beschichtungskabine 1 hineingefahren werden können.

Dadurch, dass die am Roboterarbeitsplatz angrenzenden Seitenwände der Beschichtungskabine 1 offengelassen sind, ist eine besonders gute Manövrierfähigkeit der Roboterarme ermöglicht.

Andererseits erfordert die relativ offene Ausführungsform der Beschichtungskabinen 1 eine optimale Beschichtungsmaterialabsaugung. Dies wird erfindungsgemäß insbesondere durch ein optimiertes System realisiert, welches mindestens einen vertikal verlaufenden Absaugkanal 2 aufweist, der strömungsmäßig mit einem Beschichtungsmaterial-Abscheidersystem 3, insbesondere dem Zyklon-Abscheider 3.1 und dem nachgeschalteten Filter-Abscheider 3.2, verbunden oder verbindbar ist.

Bei der in FIG. 9 gezeigten Ausführungsformen ist vorgesehen, dass die Beschichtungskabine 1 eine einen Beschichtungsbereich der Beschichtungskabine 1 zumindest bereichsweise festlegende Beschichtungskammer mit einem Kabinenboden 11 sowie mit mindestens einer vertikal verlaufenden Seitenwand aufweist, wobei der vertikal verlaufende Absaugkanal 2 der Kabinenabsaugung in einem Eckbereich der Beschichtungskabine 1 ausgebildet ist.

In einer Draufsicht auf den Kabinenboden 11 gesehen bildet der Kabinenboden 11 eine polygonale Fläche, insbesondere mit einem zumindest im Wesentlichen rechteckförmigen Bereich und mit einem sich an einer Seite des rechteckförmigen Bereichs anschließenden und in Richtung eines Eckbereichs konvergierenden Bereich, wobei der vertikal verlaufende Absaugkanal 2 der Kabinenabsaugung in dem Eckbereich ausgebildet ist, in dessen Richtung der sich an dem zumindest im Wesentlichen rechteckförmigen Bereich anschließende Bereich konvergiert.

Der zumindest im Wesentlichen rechteckförmige Bereich des Kabinenbodens 11 ist in einem Eckbereich des im Wesentlichen rechteckförmigen Bereichs 12 ohne vollständig geschlossene vertikal verlaufende Seitenwände ausgebildet. Im Unterschied zu der Ausführungsform gemäß FIG. 1 sind bei der Ausführungsform gemäß FIG. 9 in dem Eckbereich zwar vertikal verlaufende Seitenwände, allerdings weisen diese relativ große Fensterbereiche 19 auf.

Außerhalb des zumindest im Wesentlichen rechteckförmigen Bereichs 12 des Kabinenbodens 11 und bei dem Eckbereich ist ein Beschichtungsroboter-Platz für mindestens einen Beschichtungsroboter 14 vorgesehen.

Die Erfindung ist durch die Ansprüche definiert.

### Bezugszeichenliste

- 1: Beschichtungskabine
- 2: vertikal verlaufender Absaugkanal der Kabinenabsaugung
- 3: Beschichtungsmaterial-Abscheidersystem
- 3.1: Zyklonabscheider
- 3.2: Filtereinheit
- 4: vertikal verlaufende Schlitzöffnungen des vertikal verlaufenden Absaugkanals
- 6: Klappe
- 7: Wandung des Absaugkanals
- 8: in vertikaler Richtung verlaufende Achse der Klappe
- 10: horizontale Schlitzöffnung des vertikal verlaufenden Absaugkanals
- 11: Kabinenboden
- 12: rechteckförmiger Bereich des Kabinenbodens
- 13: konvergierender Bereich des Kabinenbodens
- 14: Beschichtungsroboter
- 16: Handbeschichtungsplatz oder Automatikbeschichtungsbereich
- 17: Fördervorrichtung
- 18: Sprühvorrichtung
- 19: Fensterbereich
- 100: Beschichtungsanlage

## Patentansprüche

1. Beschichtungskabine (1) zum Beschichten von Werkstücken mit Beschichtungsmaterial, insbesondere mit Beschichtungspulver, wobei der Beschichtungskabine (1) eine Kabinenabsaugung zugeordnet ist zum insbesondere bedarfsweisen Absaugen von bei einem Beschichtungsvorgang anfallendem überschüssigen Beschichtungsmaterial, wobei die Beschichtungsmaterialabsaugung mindestens einen vertikal verlaufenden Absaugkanal (2) aufweist, der strömungsmäßig mit einem Beschichtungsmaterial-Abscheidersystem (3; 3.1, 3.2) verbunden oder verbindbar ist,
**dadurch gekennzeichnet, dass**
der vertikal verlaufende Absaugkanal (2) über zwei vertikal verlaufende Schlitzöffnungen (4) mit einem Beschichtungsbereich der Beschichtungskabine (1) in Fluidverbindung steht, wobei ein effektiver Strömungsquerschnitt der mit den beiden vertikal verlaufenden Schlitzöffnungen (4) bereitgestellten Fluidverbindung in vertikaler Richtung des Absaugkanals (2) stetig variiert, wobei dem vertikal verlaufenden Absaugkanal (2) eine sich in vertikaler Richtung erstreckende Klappe (6) zugeordnet ist, welche zumindest bereichsweise den Absaugkanal (2) von dem Beschichtungsbereich der Beschichtungskabine (1) räumlich trennt, wobei die beiden vertikal verlaufenden Schlitzöffnungen (4) jeweils durch eine vertikale Spaltöffnung zwischen der Klappe (6) und einer Wandung (7) des Absaugkanals (2) gebildet werden, wobei die sich in vertikaler Richtung erstreckende Klappe (6) um eine in vertikaler Richtung verlaufende Achse (8) relativ zu dem Absaugkanal (2) verschwenkbar gelagert ist, und zwar vorzugsweise zwischen einer ersten Stellung, in welcher ein erster an einen Beschichtungsbetrieb der Beschichtungskabine (1) angepasster effektiver Strömungsquerschnitt der mit den beiden vertikal verlaufenden Schlitzöffnungen (4) bereitgestellten Fluidverbindung eingestellt ist, und mindestens einer zweiten Stellung, in welcher ein zweiter an einen Reinigungsbetrieb der Beschichtungskabine (1) angepasster effektiver Strömungsquerschnitt der mit den beiden vertikal verlaufenden Schlitzöffnungen (4) bereitgestellten Fluidverbindung eingestellt ist.

2. Beschichtungskabine (1) nach Anspruch 1,
wobei der Absaugkanal (2) einen ersten Endbereich und einen gegenüberliegenden zweiten Endbereich aufweist, wobei der Absaugkanal (2) über einen der beiden Endbereiche strömungsmäßig mit einer Absaugvorrichtung verbunden ist, wobei der effektive Strömungsquerschnitt der mit den beiden vertikal verlaufenden Schlitzöffnungen (4) bereitgestellten Fluidverbindung in Richtung des einen der beiden Endbereiche des Absaugkanals (2), über den der Absaugkanal (2) strömungsmäßig mit der Absaugvorrichtung verbunden ist, insbesondere stetig abnimmt.

3. Beschichtungskabine (1) nach Anspruch 1 oder 2,
wobei die beiden vertikal verlaufenden Schlitzöffnungen (4) jeweils die Form eines Dreiecks, insbesondere eines rechtwinkligen Dreiecks, aufweisen.

4. Beschichtungskabine (1) nach einem der Ansprüche 1 bis 3,
wobei der vertikal verlaufende Absaugkanal (2) über zwei vertikal verlaufende Schlitzöffnungen (4) mit einem Beschichtungsbereich der Beschichtungskammer in Fluidverbindung steht, wobei ein effektiver Strömungsquerschnitt der mit den beiden vertikal verlaufenden Schlitzöffnungen (4) bereitgestellten Fluidverbindung variabel einstellbar ist, und zwar vorzugsweise auf einen ersten Wert, welcher an einen Beschichtungsbetrieb der Beschichtungskabine (1) angepasst ist, und einen im Vergleich zum ersten Wert größeren zweiten Wert, welcher an einen Reinigungsbetrieb der Beschichtungskabine (1) angepasst ist.

5. Beschichtungskabine (1) nach einem der Ansprüche 1 bis 4,
wobei die Klappe (6) eine Querschnittsgeometrie aufweist, die zumindest im Wesentlichen der Querschnittsgeometrie eines gleichschenkligen Dreiecks entspricht, wobei die der Basis des gleichschenkligen Dreiecks entsprechenden Fläche der Klappe (6) dem Beschichtungsbereich der Beschichtungskabine (1) zugewandt ist.

6. Beschichtungskabine (1) nach einem der Ansprüche 1 bis 5,
wobei der Klappe (6) ein insbesondere elektromotorischer oder pneumatischer Antrieb zugeordnet ist, welcher ausgebildet ist, bedarfsweise die Stellung der Klappe (6) relativ zu dem Absaugkanal (2) zu verändern oder einzustellen.

7. Beschichtungskabine (1) nach einem der Ansprüche 1 bis 6,
wobei der vertikal verlaufende Absaugkanal (2) über eine erste, am oberen Endbereich des Absaugkanals (2) vorgesehene horizontale Schlitzöffnung (4) und über eine zweite, am unteren Endbereich des Absaugkanals (2) vorgesehene horizontale Schlitzöffnung (4) mit dem Absaugkanal (2) in Fluidverbindung steht, wobei der Absaugkanal (2) über seinen oberen Endbereich oder über seinen unteren Endbereich strömungsmäßig mit einer Absaugvorrichtung verbunden ist, und wobei ein effektiver Strömungsquerschnitt der horizontalen Schlitzöffnung (4), die an dem Endbereich des Absaugkanals (2) vorgesehen ist, über den der Absaugkanal (2) mit der Absaugvorrichtung strömungsmäßig verbunden ist, kleiner ist als ein effektiver Strömungsquerschnitt der anderen horizontalen Schlitzöffnung (4).

8. Beschichtungskabine (1) nach einem der Ansprüche 1 bis 7,
wobei die Beschichtungskabine (1) eine einen Beschichtungsbereich der Beschichtungskabine (1) zumindest bereichsweise festlegende Beschichtungskammer mit einem Kabinenboden (11) sowie mit mindestens einer vertikal verlaufenden Seitenwand aufweist, wobei der vertikal verlaufende Absaugkanal (2) der Kabinenabsaugung in einem Eckbereich der Beschichtungskabine (1) ausgebildet ist.

9. Beschichtungskabine (1) nach Anspruch 8,
wobei in einer Draufsicht auf den Kabinenboden (11) der Kabinenboden (11) eine polygonale Fläche bildet, insbesondere mit einem zumindest im Wesentlichen rechteckförmigen Bereich (12) und mit einem sich an einer Seite des rechteckförmigen Bereichs (12) anschließenden und in Richtung eines Eckbereichs konvergierenden Bereich (13), wobei der vertikal verlaufende Absaugkanal (2) der Kabinenabsaugung in dem Eckbereich ausgebildet ist, in Richtung dessen der sich an dem zumindest im Wesentlichen rechteckförmigen Bereich (12) anschließenden Bereich konvergiert.

10. Beschichtungskabine (1) nach Anspruch 9,
wobei der zumindest im Wesentlichen rechteckförmige Bereich (12) des Kabinenbodens (11) in einem Eckbereich des im Wesentlichen rechteckförmigen Bereichs (12) ohne zumindest vollständig geschlossene vertikal verlaufende Seitenwände ausgebildet ist, und wobei außerhalb des zumindest im Wesentlichen rechteckförmigen Bereichs (12) des Kabinenbodens (11) und bei dem Eckbereich ohne den zumindest vollständig geschlossenen vertikal verlaufenden Seitenwänden ein Beschichtungsroboter-Platz für mindestens einen Beschichtungsroboter (14) vorgesehen ist.

11. Beschichtungskabine (1) nach Anspruch 9 oder 10,
wobei der Kabinenboden (11) einen in einer Draufsicht auf den Kabinenboden (11) trichterförmigen und in Richtung des Eckbereichs geneigten Bodenbereich sowie an den trichterförmigen und in Richtung des Eckbereichs geneigten Bodenbereich anschließende Seitenbereiche aufweist, welche jeweils in Richtung des trichterförmigen und in Richtung des Eckbereichs geneigten Bodenbereichs geneigt sind.

12. Beschichtungskabine (1) nach einem der Ansprüche 9 bis 11, wobei die Kabinenabsaugung mindestens einen am Kabinenboden (11) angeordneten, horizontal ausgerichteten Absaugschlitz aufweist, der vorzugsweise über einen dem mindestens einen am Kabinenboden (11) angeordneten, horizontal ausgerichteten Absaugschlitz zugeordneten Absaugkanal (2) strömungsmäßig mit dem vertikal verlaufenden Absaugkanal (2) in Verbindung steht.

13. Beschichtungskabine (1) nach einem der Ansprüche 9 bis 12, wobei der Beschichtungskabine (1) eine Fördervorrichtung (17) zum Transport der zu beschichtenden Werkstücke durch die von der Beschichtungskabine (1) definierte Beschichtungskammer zugeordnet ist, wobei eine von der Fördervorrichtung (17) vorgegebene Förderstrecke parallel zu einer Seite des rechteckförmigen Bereichs (12) und senkrecht zu dem in Richtung des Eckbereichs konvergierenden Bereichs (13) verläuft.

## Claims

1. A coating booth (1) for coating workpieces with coating material, in particular with coating powder, wherein a booth suction system is assigned to the coating booth (1) a for extracting, in particular as required, excess coating material produced during a coating process, wherein the coating material suction system comprises at least one vertically extending suction channel (2) which is fluidically connected to a coating material separator system (3; 3.1, 3.2),
**characterized in that**
the vertically extending suction channel (2) is in fluid communication with a coating area of the coating booth (1) via two vertically extending slot openings (4), wherein an effective flow cross-section of the fluid connection provided by the two vertically extending slot openings (4) varies continuously in the vertical direction of the suction channel (2), wherein a flap (6) extending in the vertical direction is assigned to the vertically extending suction channel (2), the flap spatially separating the suction channel (2) at least partly from the coating area of the coating booth (1), wherein the two vertically extending slot openings (4) are each formed by a vertical gap opening between the flap (6) and a wall (7) of the suction channel (2), wherein the flap extending in the vertical direction (6) is mounted so that it can pivot about a vertically extending axis (8) relative to the suction channel (2), preferably between a first position in which a first effective flow cross-section of the fluid connection provided by the two vertically extending slot openings (4) is set, adapted to a coating operation of the coating booth, and at least a second position in which a second effective flow cross-section of the fluid connection provided by the two vertically extending slot openings (4) is set, adapted to a cleaning operation of the coating booth (1).

2. The coating booth (1) according to claim 1,
wherein the suction channel (2) has a first end region and an opposite second end region, wherein the suction channel (2) is fluidically connected via one of the two end regions to a suction device, wherein the effective flow cross-section of the fluid connection provided by the two vertically extending slot openings (4) decreases particularly continuously in the direction of one of the two end regions of the suction channel (2) via which the suction channel (2) is fluidically connected to the suction device.

3. The coating booth (1) according to claim 1 or 2,
wherein the two vertically extending slot openings (4) each have the shape of a triangle, in particular a right-angled triangle.

4. The coating booth (1) according to any one of claims 1 to 3,
wherein the vertically extending suction channel (2) is in fluid communication with a coating area of the coating chamber via two vertically extending slot openings (4), wherein an effective flow cross-section of the fluid connection provided by the two vertically extending slot openings (4) is variably adjustable, preferably to a first value which is adapted to a coating operation of the coating booth (1) and a second value which is greater than the first value and is adapted to a cleaning operation of the coating booth (1).

5. The coating booth (1) according to any one of claims 1 to 4,
wherein the flap (6) has a cross-sectional geometry that corresponds at least substantially to the cross-sectional geometry of an isosceles triangle, wherein the surface of the flap (6) corresponding to the base of the isosceles triangle faces the coating area of the coating booth (1).

6. The coating booth (1) according to any one of claims 1 to 5,
wherein the flap (6) is assigned an electric motor or pneumatic drive in particular, which is designed to change or adjust the position of the flap (6) relative to the suction channel (2) as required.

7. The coating booth (1) according to any one of claims 1 to 6,
wherein the vertically extending suction channel (2) is in fluid communication with the suction channel (2) via a first horizontal slot opening (4) provided at the upper end region of the suction channel (2) and via a second horizontal slot opening (4) provided at the lower end region of the suction channel (2), whereby the suction channel (2) is fluidically connected via its upper end region or via its lower end region to a suction device, and whereby an effective flow cross-section of the horizontal slot opening (4) provided at the end region of the suction channel (2), via which the suction channel (2) is fluidically connected to the suction device, is smaller than an effective flow cross-section of the other horizontal slot opening (4).

8. The coating booth (1) according to any one of claims 1 to 7,
wherein the coating booth (1) has a coating chamber with a booth floor (11) and at least one vertically extending side wall, which defines at least part of a coating area of the coating booth (1), wherein the vertically extending suction channel (2) of the booth suction system is formed in a corner area of the coating booth (1).

9. The coating booth (1) according to claim 8,
wherein, in a top view of the booth floor (11), the booth floor (11) forms a polygonal surface, in particular with an at least substantially rectangular area (12) and with an area (13) adjoining one side of the rectangular area (12) and converging towards a corner area, wherein the vertically extending suction channel (2) of the booth suction system is formed in the corner area towards which the area adjoining the at least substantially rectangular area (12) converges.

10. The coating booth (1) according to claim 9,
wherein the at least substantially rectangular area (12) of the booth floor (11) is formed in a corner area of the substantially rectangular area (12) without at least completely closed vertically extending side walls, and wherein a coating robot space for at least one coating robot (14) is provided outside the at least substantially rectangular area (12) of the booth floor (11) and at the corner area without the at least completely closed vertically extending side walls.

11. The coating booth (1) according to claim 9 or 10,
wherein the booth floor (11) has a floor area that is funnel-shaped in a top view of the booth floor (11) and inclined toward the corner area, as well as side areas adjoining the funnel-shaped floor area inclined toward the corner area, each of which is inclined toward the funnel-shaped floor area inclined toward the corner area.

12. The coating booth (1) according to any one of claims 9 to 11,
wherein the booth suction system has at least one horizontally aligned suction slot arranged on the booth floor (11), which is preferably fluidically connected via a suction channel (2) assigned to the at least one horizontally aligned suction slot arranged on the booth floor (11) to the vertically extending suction channel (2).

13. The coating booth (1) according to any one of claims 9 to 12,
wherein the coating booth (1) is assigned a conveyor device (17) for transporting the workpieces to be coated through the coating chamber (1) defined by the coating booth (1), wherein a conveyor path specified by the conveyor device (17) runs parallel to one side of the rectangular area (12) and perpendicular to the area (13) converging in the direction of the corner area.

## Revendications

1. Cabine de revêtement (1) pour revêtir des pièces à œuvrer avec un matériau de revêtement, en particulier avec une poudre de revêtement, dans laquelle une aspiration de cabine est associée à la cabine de revêtement (1) pour aspirer, en particulier si nécessaire, un matériau de revêtement en excès issu d'une opération de revêtement, dans laquelle l'aspiration de matériau de revêtement présente au moins un canal d'aspiration (2) s'étendant à la verticale, qui est relié ou peut être relié de manière fluidique à un système de séparation de matériau de revêtement (3 ; 3.1, 3.2),
**caractérisé en ce que**
le canal d'aspiration (2) s'étendant la verticale est en communication fluidique avec une zone de revêtement de la cabine de revêtement (1) par l'intermédiaire de deux ouvertures en fente (4) s'étendant à la verticale, dans laquelle une section d'écoulement effective de la communication fluidique assurée avec les deux ouvertures en fente (4) s'étendant à la verticale varie en permanence dans une direction verticale du canal d'aspiration (2), dans laquelle il est associé au canal d'aspiration (2) s'étendant à la verticale un clapet (6) s'étendant dans une direction verticale, qui sépare de manière spatiale, au moins localement, le canal d'aspiration (2) de la zone de revêtement de la cabine de revêtement (1), dans laquelle les deux ouvertures en fente (4) s'étendant à la verticale sont chacune formées à travers un intervalle vertical entre le clapet (6) et une paroi (6) du canal d'aspiration (2), dans laquelle le clapet (6) s'étendant dans une direction verticale est monté de manière pivotante autour d'un axe (8) s'étendant dans une direction verticale relativement au canal d'aspiration (2), et ce, de préférence entre une première position à laquelle une première section d'écoulement effective, adaptée à un fonctionnement de revêtement de la cabine de revêtement (1), de la communication fluidique assurée avec les deux ouvertures en fente (4) s'étendant à la verticale, est réglée, et au moins une seconde position à laquelle une seconde section d'écoulement effective, adaptée à un fonctionnement de nettoyage de la cabine de revêtement, de la communication fluidique assurée avec les deux ouvertures en fente (4) s'étendant à la verticale, est réglée.

2. Cabine de revêtement (1) selon la revendication 1,
dans laquelle le canal d'aspiration (2) présente une première zone d'extrémité et une seconde zone d'extrémité opposée, dans laquelle le canal d'aspiration (2) est relié de manière fluidique à un dispositif d'aspiration par l'intermédiaire de l'une des deux zones d'extrémité, dans laquelle la section d'écoulement effective de la communication fluidique, assurée avec les deux ouvertures en fente (4) s'étendant à la verticale dans une direction de l'une des deux zones d'extrémité du canal aspiration (2) par l'intermédiaire de laquelle le canal aspiration (2) est relié de manière fluidique au dispositif d'aspiration, diminue en particulier en permanence.

3. Cabine de revêtement (1) selon la revendication 1 ou 2,
dans laquelle les deux ouvertures en fente (4) s'étendant à la verticale présentent chacune la forme d'un triangle, en particulier d'un triangle rectangle.

4. Cabine de revêtement (1) selon l'une quelconque des revendications 1 à 3, dans laquelle le canal d'aspiration (2) s'étendant à la verticale est en communication fluidique avec une zone de revêtement de la chambre de revêtement par l'intermédiaire de deux ouvertures en fente (4) s'étendant à la verticale, dans laquelle une section d'écoulement effective de la communication fluidique assurée avec les deux ouvertures en fente (4) s'étendant la verticale peut être réglée de manière variable, et ce, de préférence, sur une première valeur qui est adaptée à un fonctionnement de revêtement de la cabine de revêtement (1), et sur une seconde valeur qui est, par comparaison avec la première valeur, plus grande et qui est adaptée à un fonctionnement de nettoyage de la cabine de revêtement (1).

5. Cabine de revêtement (1) selon l'une quelconque des revendications 1 à 4, dans laquelle le clapet (6) présente une géométrie de section transversale qui correspond au moins sensiblement à la géométrie de section transversale d'un triangle isocèle, dans laquelle la surface, correspondant à la base du triangle isocèle, du clapet (6) est tournée vers la zone de revêtement de la cabine de revêtement (1).

6. Cabine de revêtement (1) selon l'une quelconque des revendications 1 à 5, dans laquelle il est associé au clapet (6) un entraînement, en particulier électromoteur ou pneumatique, qui est réalisé pour modifier ou régler, si nécessaire, la position du clapet (6) relativement au canal d'aspiration (2).

7. Cabine de revêtement (1) selon l'une quelconque des revendications 1 à 6, dans laquelle le canal d'aspiration (2) s'étendant à la verticale est en communication fluidique avec le canal d'aspiration (2) par l'intermédiaire d'une première ouverture en fente (4) prévue de manière horizontale au niveau de la zone d'extrémité supérieure du canal d'aspiration (2), et par l'intermédiaire d'une seconde ouverture en fente (4) prévue de manière horizontale au niveau de la zone d'extrémité inférieure du canal d'aspiration (2), dans laquelle le canal d'aspiration (2) est relié de manière fluidique à un dispositif d'aspiration par l'intermédiaire de sa zone d'extrémité supérieure ou par l'intermédiaire de sa zone d'extrémité inférieure, et dans laquelle une section transversale d'écoulement effective de l'ouverture en fente horizontale (4) qui est prévue au niveau de la zone d'extrémité du canal d'aspiration (2), par l'intermédiaire de laquelle le canal d'aspiration (2) est relié de manière fluidique au dispositif d'aspiration, est plus petite qu'une section transversale d'écoulement effective de l'autre ouverture en fente horizontale (4).

8. Cabine de revêtement (1) selon l'une quelconque des revendications 1 à 7, dans laquelle la cabine de revêtement (1) présente une chambre de revêtement, qui détermine au moins localement une zone de revêtement de la cabine de revêtement (1), avec un fond de cabine (11) ainsi qu'au moins une paroi latérale s'étendant à la verticale, dans laquelle le canal aspiration (2) s'étendant à la verticale de l'aspiration de cabine est réalisé dans une zone d'angle de la cabine de revêtement (1).

9. Cabine de revêtement (1) selon la revendication 8,
dans laquelle, dans une vue de dessus du fond de cabine (11), le fond de cabine (11) forme une surface polygonale, en particulier avec une zone au moins sensiblement rectangulaire (12) et avec une zone (13) adjacente à un côté de la zone rectangulaire (12) et convergeant en direction de la zone d'angle, dans laquelle le canal d'aspiration (2) s'étendant à la verticale de l'aspiration de cabine est réalisé dans la zone d'angle en direction de laquelle converge la zone adjacente à la zone au moins sensiblement rectangulaire (12).

10. Cabine de revêtement (1) selon la revendication 9,
dans laquelle la zone au moins sensiblement rectangulaire (12) du fond de cabine (11) est réalisée dans une zone d'angle de la zone sensiblement rectangulaire (12) sans parois latérales s'étendant la verticale, tout du moins complètement fermées, et dans laquelle, à l'extérieur de la zone au moins sensiblement rectangulaire (12) du fond de cabine (11) et près de la zone d'angle sans parois latérales s'étendant à la verticale, tout du moins complètement fermées, il est prévu une place de robot de revêtement pour au moins un robot de revêtement (14).

11. Cabine de revêtement (1) selon la revendication 9 ou 10,
dans laquelle le fond de cabine (11) présente, dans une vue de dessus sur le fond de cabine (11), une zone de fond tronconique et inclinée dans une direction de la zone d'angle, ainsi que des zones latérales, adjacentes à la zone de fond tronconique et inclinées en direction de la zone d'angle, qui sont chacune inclinées en direction de la zone de fond tronconique et inclinées en direction de la zone d'angle.

12. Cabine de revêtement (1) selon l'une quelconque des revendications 9 à 11,
dans laquelle l'aspiration de cabine présente au moins une fente d'aspiration orientée à l'horizontale, agencée sur le fond de cabine (11), qui est de préférence en communication fluidique avec le canal d'aspiration (2) s'étendant à la verticale par l'intermédiaire dudit au moins un canal d'aspiration (2) associé à la fente d'aspiration, orientée à l'horizontale, agencée sur le fond de cabine (11).

13. Cabine de revêtement (1) selon l'une quelconque des revendications 9 à 12,
dans laquelle il est associé à la cabine de revêtement (1) un dispositif de refoulement (17) pour transporter la pièce à œuvrer devant être revêtue à travers la chambre de revêtement définie par la cabine de revêtement (1), dans laquelle un trajet de refoulement donné du dispositif de refoulement (17) s'étend parallèlement à un côté de la zone rectangulaire (12) et perpendiculairement à la zone (13) convergeant en direction de la zone d'angle.
